# EUROPEAN PATENT APPLICATION

(11) **EP 2 501 019 A2**
(43) Date of publication of application: **19.09.2012**
(21) Application number: 10830185.4
(22) Date of filing: 12.11.2010
(51) Int. Cl.: H02J 13/00, H02J 3/14

(54) **POWER CONTROL APPARATUS AND POWER CONTROL METHOD USING SAME**

(30) Priority: 13.11.2009 KR 20090109752
(71) Applicant: LG Electronics Inc., Seoul 150-721 (KR)
(72) Inventor: PARK, Jong Soo, Seoul 137-724 (KR); HEO, Seong Geun, Seoul 137-724 (KR); RYOO, Sung Nam, Seoul 137-724 (KR)
(74) Representative: Cabinet Plasseraud
(86) International application number: PCT/KR2010/007983
(87) International publication number: WO 2011/059253

(57) **Abstract**

The present invention provides a power control method and a power control apparatus. The power control method of the present invention comprises the steps of: a first charge comparison step for receiving charge information of supplied power, and comparing the charge of the supplied power with a preset reference charge; and a second charge comparison step for comparing the charge of the supplied power with the preset lowest charge. Further, the method comprises the steps of: a first power quantity comparison step for confirming a stored power quantity within a power storage unit, and comparing the stored power quantity with a preset reference power quantity; and a second power quantity comparison step for comparing the stored power quantity with a preset power quantity demand. Further, the method comprises a control step for selecting one of externally supplied power and internally stored power as the usage power for the customer, through at least one of a charge comparison step and the power quantity comparison step. Particularly, the invention is characterized in that: if the charge of the supplied power is lower than the reference charge or the charge of the supplied power is higher than the reference charge in the first charge comparison step, the externally supplied power is selected as the usage power for the customer in case the stored power quantity is lower than the reference power quantity and the power quantity demand, through the first and second power quantity comparison steps; and if the charge of the supplied power is higher than the reference charge in the first charge comparison step, the stored power is selected as the usage power for the customer in case the stored power quantity is higher than the reference power quantity or the power quantity demand, through the first and second power quantity comparison steps.

## Description

### [Technical Field]

The present invention relates to a power control apparatus and a power control method using the same, which enable power control in a power supply network based on bidirectional communication between a supplier and a consumer.

### [Background Art]

The Korean power grid is constructed as a centralized vertical network system that is focused on a central location and is regulated by a producer. An electric charge system is based on a charge system per use, and other charge systems per voltage and per time are added thereto. A progressive stage system has been applied to residential electricity. Also, to disperse power demand concentrated in a particular time, a late-night power plan is maintained. However, such a power system cannot solve a global task including prevention of global warming, absence of a solution for increase in raw material price, and problems of excessive energy consumption control and stable power supply.

Accordingly, to do away with a conventional power system and improve effectiveness of a power industry via construction of a bidirectional information transmission system between a consumer and a supplier, it is necessary to develop an intelligent power system. The intelligent power system provides network connection of all electric appliances, power storage devices, and distributed power sources of a consumer, which may enable interaction between a consumer and a supplier. Moreover, construction of the intelligent power system is necessary to allow consumers to adjust their power demand patterns, and there also exists a need for development of intelligent apparatuses capable of performing bidirectional communication with the intelligent power system.

### [Disclosure]

### [Technical Problem]

An object of the present invention is to provide a method and system for more efficiently managing power (or energy) in an intelligent power supply network.

Another object of the present invention is to provide a method for selecting a power supply source capable of minimizing costs from among a plurality of power supply sources.

Another object of the present invention is to provide a method for selecting a power supply source capable of maximizing energy utility from among a plurality of power supply sources.

Another object of the present invention is to provide a power control apparatus and control method for managing power distribution so as to suit to consumer demand.

Another object of the present invention is to provide a power control apparatus and control method for efficiently managing power via load cutoff based on consumer demand.

A further object of the present invention is to provide a power control apparatus and control method for efficiently utilizing power via external sale (or inverse transmission) of a surplus power quantity based on consumer demand.

### [Technical Solution]

To solve the above described technical objects and in accordance with one embodiment of the present invention, there is provided a power control method including a charge comparison step including a first charge comparison step for receiving charge information of supplied power and comparing the charge of the supplied power with a preset reference charge, and a second charge comparison step for comparing the charge of the supplied power with the preset lowest charge, a power quantity comparison step including a first power quantity comparison step for confirming a stored power quantity within a power storage unit and comparing the stored power quantity with a preset reference power quantity, and a second power quantity comparison step for comparing the stored power quantity with a preset power quantity demand, and a control step for selecting one of externally supplied power and internally stored power as usage power for a customer based on the results obtained through at least one of the charge comparison step and the power quantity comparison step, wherein, if it is determined through the first charge comparison step that the charge of the supplied power is lower than the reference charge or is higher than the reference charge and it is determined through the first and second power quantity comparison steps that the stored power quantity is lower than the reference power quantity and the power quantity demand, the externally supplied power is selected as the usage power for the customer, and wherein, if it is determined through the first charge comparison step that the charge of the supplied power is higher than the reference charge and it is determined through the first and second power quantity comparison steps that the stored power quantity is higher than the reference power quantity or the power quantity demand, the stored power is selected as the usage power for the customer.

In accordance with another aspect of the present invention, there is provided a power control method including a charge comparison step including a first charge comparison step for receiving charge information of supplied power and comparing the charge of the supplied power with a preset reference charge, and a second charge comparison step for comparing the charge of the supplied power with the preset lowest charge, a power quantity comparison step including a first power quantity comparison step for confirming a stored power quantity within a power storage unit and comparing the stored power quantity with a preset reference power quantity, and a second power quantity comparison step for comparing the stored power quantity with a preset power quantity demand, and a load control process execution step for executing one of load cutoff and load return for a customer through at least one of the charge comparison step and the power quantity comparison step, wherein, it is determined through the first and second charge comparison steps that the charge of the supplied power is lower than the reference charge and the lowest charge, a load return process for executing return of cutoff load for the customer is executed, and wherein, it is determined through the first and second power quantity comparison steps that the stored power quantity is lower than the reference power quantity and the power quantity demand, a load cutoff process for cutting off at least one load for the customer is executed.

In accordance with another aspect of the present invention, there is provided a power control method including a charge comparison step including a first charge comparison step for receiving charge information of supplied power and comparing the charge of the supplied power with a preset reference charge, and a second charge comparison step for comparing the charge of the supplied power with the preset lowest charge, a power quantity comparison step for confirming a stored power quantity within a power storage unit and comparing the stored power quantity with a preset reference power quantity, and a control step for performing external sale of stored surplus power for a customer based on the results obtained through at least one of the charge comparison step and the power quantity comparison step, wherein, if it is determined through the first and second charge comparison steps that the charge of the supplied power is lower than the reference charge and the lowest charge, the supplied power is stored in a power storage unit for the customer, and wherein, if it is determined through the power quantity comparison step that the stored power quantity is higher than the reference power quantity, external sale of a surplus power quantity exceeding the reference power quantity among the stored power quantity is performed.

In accordance with another aspect of the present invention, there is provided a power control method including a charge comparison step including a first charge comparison step for receiving charge information of supplied power and comparing the charge of the supplied power with a preset reference charge, and a second charge comparison step for comparing the charge of the supplied power with the preset lowest charge, a power quantity comparison step including a first power quantity comparison step for confirming a stored power quantity within a power storage unit and comparing the stored power quantity with a preset reference power quantity, and a second power quantity comparison step for comparing the stored power quantity with a preset power quantity demand, and a power control step for selectively executing at least one of a usage power selection process for selecting one of externally supplied power and internally stored power as usage power for a customer, a load control process for executing one of load cutoff and load return for the customer, and a power sales process for external sale of stored surplus power for the customer, based on the results obtained through at least one of the charge comparison step and the power quantity comparison step.

In accordance with another aspect of the present invention, there is provided a power control apparatus including a communication unit for receiving charge information of supplied power for a customer and receiving information on stored power quantity for the customer, the communication unit having a bidirectional communication function via a power information network, an information comparison unit for setting a reference charge, the lowest charge, a reference power quantity, and a power quantity demand, and comparing the set reference values with the charge information of the supplied power and the stored power quantity information received through the communication unit, the information comparison unit including a charge comparer for comparing the charge of the supplied power with the reference charge and comparing the charge of the supplied power with the lowest charge, and a power quantity comparer for comparing the stored power quantity with the reference power quantity and comparing the stored power quantity with the power quantity demand, and a controller for selecting one of externally supplied power and internally stored power as usage power for the customer based on the comparative results of the information comparison unit, wherein the controller selects the externally supplied power as the usage power for the customer if the charge of the supplied power is lower than the reference charge or is higher than the reference charge and if the stored power quantity is lower than the reference power quantity and the power quantity demand, and wherein the controller selects the stored power as the usage power for the customer if the charge of the supplied power is higher than the reference charge and if the stored power quantity is higher than the reference power quantity or the power quantity demand.

In accordance with another aspect of the present invention, there is provided a power control apparatus including a communication unit for receiving charge information of supplied power for a customer and receiving information on stored power quantity for the customer, the communication unit having a bidirectional communication function via a power information network, an information comparison unit for setting a reference charge, the lowest charge, a reference power quantity, and a power quantity demand, and comparing the set reference values with the charge information of the supplied power and the stored power quantity information received through the communication unit, the information comparison unit including a charge comparer for comparing the charge of the supplied power with the reference charge and comparing the charge of the supplied power with the lowest charge, and a power quantity comparer for comparing the stored power quantity with the reference power quantity and comparing the stored power quantity with the power quantity demand, and a controller for executing a load control process that cuts off or returns at least one load for a customer based on the comparative results of the information comparison unit, wherein the controller executes a load return process for returning the at least one cutoff load for the customer if the charge of the supplied power is lower than the reference charge and the lowest charge, and wherein the controller executes a load cutoff process for cutting off the at least one load for the customer if the stored power quantity is lower than the reference power quantity and the power quantity demand.

In accordance with another aspect of the present invention, there is provided a power control apparatus including a communication unit for receiving charge information of supplied power for a customer and receiving information on stored power quantity for the customer, the communication unit having a bidirectional communication function via a power information network, an information comparison unit for setting a reference charge, the lowest charge, a reference power quantity, and a power quantity demand, and comparing the set reference values with the charge information of the supplied power and the stored power quantity information received through the communication unit, the information comparison unit including a charge comparer for comparing the charge of the supplied power with the reference charge and comparing the charge of the supplied power with the lowest charge, and a power quantity comparer for comparing the stored power quantity with the reference power quantity and comparing the stored power quantity with the power quantity demand, and a controller for performing external sale of stored surplus power for the customer based on the comparative results of the information comparison unit, wherein the controller stores the supplied power in a power storage unit if the charge of the supplied power is lower than the reference charge and the lowest charge, and wherein the controller performs of external sale of a surplus power quantity exceeding the reference power quantity among the stored power quantity if the stored power quantity is higher than the reference power quantity.

In accordance with another aspect of the present invention, there is provided a power control apparatus including a communication unit for receiving charge information of supplied power for a customer and receiving information on stored power quantity for the customer, the communication unit having a bidirectional communication function via a power information network, an information comparison unit for setting a reference charge, the lowest charge, a reference power quantity, and a power quantity demand, and comparing the set reference values with the charge information of the supplied power and the stored power quantity information received through the communication unit, and a controller for controlling selective execution of at least one of a usage power selection process for selecting one of externally supplied power and internally stored power as usage power for the customer, a load control process for executing one of load cutoff and load return for the customer, and a power sales process for external sale of stored surplus power for the customer, based on the comparative results of the information comparison unit.

In accordance with a further aspect of the present invention, there is provided a power control apparatus for managing power distribution in an intelligent power supply network including a plurality of power supply sources, the power control apparatus including a power distribution management unit for receiving supplied power information from at least one of the plurality of power supply sources, receiving power demand information from power consuming units, and performing power distribution based on the supplied power information and the power demand information, thereby determining a power consumption mode, and a load management unit for determining whether or not to cutoff the power consuming units based on a preset load cutoff priority if power is consumed based on the power consumption mode, wherein the supplied power information includes a real time charge of supplied power and a suppliable power quantity limit, and wherein the power demand information includes a consumer set power quantity limit, a consumer set charge limit, and the consumer set lowest charge.

The power distribution management unit may include a first real time charge comparer for comparing the real time charge of the supplied power with the consumer set charge limit if power is not stored up to 100% in an energy storage unit, a supply power selector for identifying whether or not current supplied power is main power, sub power, or stored power within the energy storage unit among the plurality of power supply sources if the real time charge is higher than the charge limit, a supplied power quantity comparer for comparing a stored power quantity within the energy storage unit with the consumer set power quantity limit if the current supplied power is the main power, and a second real time charge comparer for comparing a real time charge of the main power with the consumer set lowest charge if the stored power quantity within the energy storage unit is lower than the power quantity limit, thereby determining the power consumption mode.

The power consumption mode may include at least one of a first power consumption mode for storing the supplied main power in the energy storage unit, a second power consumption mode for selling the supplied main power to other consumers, and a third power consumption mode for consuming the power until the stored power quantity within the energy storage unit reaches a preset residual power quantity.

The main power may be power supplied from a power plant among the plurality of power supply sources, the sub power may be power supplied from at least one of a renewable fuel cell, a solar cell, and a fuel cell in a plug-in hybrid vehicle, and the stored power within the energy storage unit may be stored power of at least one of the main power and the sub power.

The power distribution management unit may include a first real time charge comparer for comparing the real time charge of the supplied power with the consumer set charge limit if power is not stored up to 100% in an energy storage unit, a supply power selector for identifying whether or not current supplied power is main power, sub power, or stored power within the energy storage unit among the plurality of power supply sources if the real time charge is higher than the charge limit, a supplied power quantity comparer for comparing a stored power quantity within the energy storage unit with the consumer set power quantity limit if the current supplied power is the main power, and a power quantity demand comparer for switching the main power to the stored power within the energy storage unit if the stored power quantity within the energy storage unit is higher than the power quantity limit, and comparing the stored power quantity within the energy storage unit with a power quantity demand that a consumer wants to consume, thereby determining whether or not to consume the power.

The power distribution management unit may include a first real time charge comparer for comparing the real time charge of the supplied power with the consumer set charge limit if power is not stored up to 100% in an energy storage unit, a supply power selector for identifying whether or not current supplied power is main power, sub power, or stored power within the energy storage unit among the plurality of power supply sources if the real time charge is higher than the charge limit, a supplied power quantity comparer for comparing a stored power quantity within the energy storage unit with the consumer set power quantity limit if the current supplied power is the stored power within the energy storage unit, and a power quantity demand comparer for comparing the stored power quantity within the energy storage unit with a power quantity demand that a consumer wants to consume if the stored power quantity within the energy storage unit is higher than the power quantity limit, thereby determining whether or not to consume the power.

The load management unit may further include a load returner for returning the cutoff load based on a preset return mode, the preset return mode may include a priority return mode and a sequential return mode, the priority return mode may be a mode of returning cutoff loads in reverse of a cutoff command receiving order, and the sequential return mode may be a mode of returning the cutoff loads in the cutoff command receiving order, and the preset load cutoff priority may be set based on power consumption characteristics of the power consuming units.

### [Advantageous Effects]

According to the present invention, it is possible to more efficiently manage power in an intelligent power supply network by minimizing costs, satisfying consumer demand, or selecting a power supply source to satisfy both requirements. Consumers may minimize costs and more efficiently use power by performing power distribution based on power information provided in real time and consumer set power information. Also, selecting a power consumption mode suitable for consumer demand enables adaptive power consumption via storage of residual power, or inverse transmission or resale of power to other consumers or suppliers.

### [Description of Drawings]

FIG. 1 is a diagram showing a schematic configuration of an intelligent power supply network according to an embodiment of the present invention.

FIG. 2 is a block diagram showing a schematic configuration of a power control apparatus 134 according to the embodiment of the present invention.

FIG. 3 is a block diagram showing an internal configuration of a power distribution management unit 240 according to the embodiment of the present invention.

FIGs. 4 to 6 are flowcharts for explaining a power distribution management method that is performed by the power distribution management unit 240 according to the embodiment of the present invention.

FIG. 7 is a block diagram showing an internal configuration of a load cutoff controller 252 according to the embodiment of the present invention.

FIGs. 8 and 9 are block diagrams showing an entire configuration including a power control apparatus 710 according to another embodiment of the present invention.

FIGs. 10 and 11 are flowcharts showing a power control method according to another embodiment of the present invention.

### [Best Mode]

The above described objects and configuration characteristics will be more clearly understood through the following detailed description with relation to the accompanying drawings. Hereinafter, preferred embodiments according to the present invention will be described in detail with reference to the accompanying drawings.

All terms used in the following description are selected from among general terms that are currently widely used while taking into consideration the functions obtained in accordance with the present invention. The terms, however, may be changed based on the intensions of those skilled in the art or customs, or the appearance of new technologies. In addition, in particular cases, the terms arbitrarily selected by the applicant of the invention are used. In this case, the meaning of the terms will be described in the corresponding context of describing the terms. Accordingly, it is noted that the terms used herein are not interpreted simply using names of the terms, but interpreted based on actual meanings of the terms and the content of the entire description of the present invention.

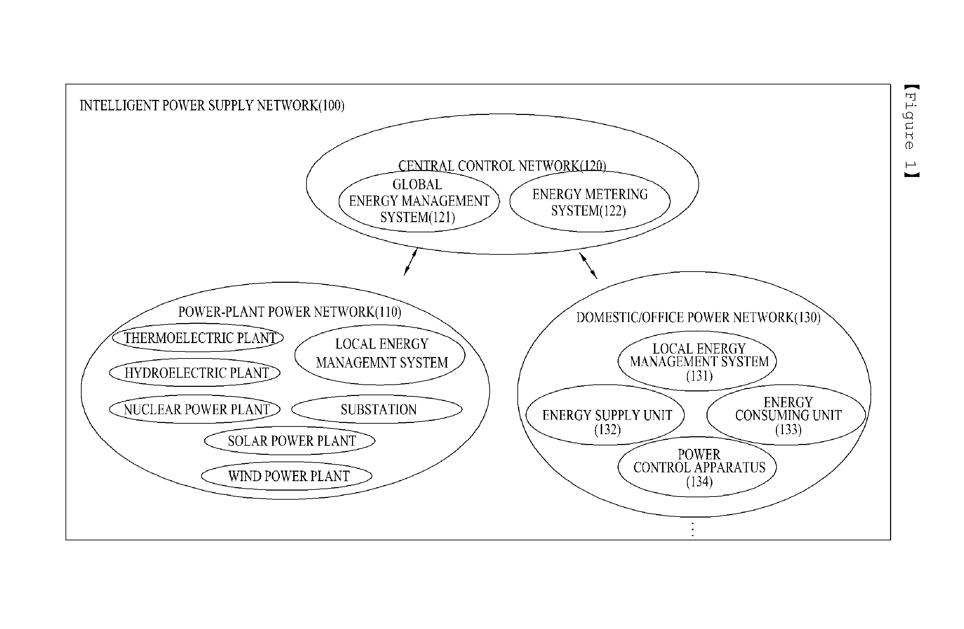

FIG. 1 is a diagram showing a schematic configuration of an intelligent power supply network according to an embodiment of the present invention.

The intelligent power supply network 100 may include at least one or more local area networks or global area networks. Examples of the local area networks may include a power-plant power network 110 that can share power information between power plants, a domestic power network 130 that can share power information between electric appliances in a home or an office power network 130 that can share power information between electric appliances in an office, and a central control network 120 that can control power information between local areas. The global area network may refer to a network including at least two or more local area networks, and may be understood as a comparative concept corresponding to the local area network.

Also, bidirectional communication between the local area networks or between units within the local area networks is possible, and bidirectional communication between a unit within any one local area network and a unit within another local area network is also possible. For example, bidirectional communication between the power-plant power network 110 and the domestic power network 130 is possible, and bidirectional communication between units within the domestic power network 130 is possible. Alternatively, bidirectional communication between a unit within the power-plant power network 110 and a unit between the domestic power network 130 is possible. Here, the unit refers to one element constituting a network. Examples of the unit may include a power plant, an electric company, a distributed power source, an energy management system, an energy metering system, a power control apparatus, and an energy consuming device. In this way, adaptive power production and power distribution may be accomplished by monitoring power consumption states of units via bidirectional communication between the respective units.

Referring to FIG. 1, the intelligent power supply network 100 according to the embodiment of the present invention may include the power-plant power network 110, the central control network 120, and the domestic/office power network 130. The power-plant power network 110, the central control network 120, and the domestic/office power network 130 may respectively be provided at least one or more within the intelligent power supply network 100.

The power-plant power network 110 may include power plants that generate power via thermoelectric power generation, nuclear power generation, or hydroelectric power generation, as well as solar power plant and wind power plant using solar energy or wind power as renewable energy. Power generated in a thermoelectric power plant, a nuclear power plant, or a hydroelectric power plant is transmitted to a substation through a power cable. The substation distributes power to consumers within the domestic/office power network after changing properties of voltage or current. In addition, even power generated by renewable energy is transmitted to the substation to thereby be distributed to respective consumers.

The central control network 120 serves to control power supply, power consumption, power distribution and management, and the like between the local area networks within the intelligent power supply network 100. The central control network includes a global energy management system 121 and an energy metering system 122.

The global energy management system 121 serves to control local energy management systems. For example, the global energy management system 121 receives energy information from a local energy management system within the power-plant power network 110 and a local energy management system within the domestic/office power network 130, thereby enabling overall energy management of the intelligent power supply network 100.

Here, the energy management system (EMS) refers to a system that manages an energy control device using energy management programs. Examples of the energy control device may include an automatic temperature control device, a cable set-top box, an intelligent display device, and an automatic light control device. The energy management system may manage power of respective consuming places in real time via communication with the energy control device, and may also estimate the necessary power in real time based on accumulated data. The energy management system may be set on a per consumer or supplier basis, and moreover may be set on a per local area network or global area network basis. For example, since real time price signals of a power market are relayed through a local energy management system installed in each home and the local energy management system communicates with each electric appliance and controls the electric appliance, a user may acquire power information on each electric appliance via the local energy management system, and may perform power management, such as setting of power quantity limits, setting of electric charge limits, and the like, based on the power information, which may achieve reduction in energy consumption and costs.

The energy metering system 122 refers to a system that measures energy usage from power control apparatuses, and collects and analyzes information on use of energy. Examples of the metering device may include an electricity meter, a gas meter, and a water meter. The energy metering system 122 receives information on supplied power from the power-plant power network 110, and also receives information on power demand from the domestic/office power network 130, and compares and analyzes the received information, thereby enabling efficient power distribution.

The energy management system and the energy metering system assist a consumer in efficiently using electricity, and provide a power supplier with an ability to detect problems of a system and to efficiently manage the system.

The domestic power network 130 corresponds to one local area network within the intelligent power supply network. The domestic power network may realize self production of electricity to be consumed using sunlight or using a fuel cell mounted in a Plug-in Hybrid Electric Vehicle (PHEV), and may supply or sell the spare electricity to other local area networks. The domestic power network 130 may perform bidirectional communication with other local area networks within the intelligent power supply network, and may also perform other independent functions, such as energy supply, consumption, storage, measurement, management, communication, and the like.

The domestic power network 130 may generally include a local energy management system 131, an energy supply unit 132, an energy consuming unit 133, and a power control apparatus 134. The domestic power network may receive information required for general management of the constituent units thereof through a terrestrial channel. Examples of the information receivable through the terrestrial channel may include unit identifier, current charge, the relative level of current charge (for example, high, medium, low), usage purpose (for example, residential use, industrial use), and error confirmation information (for example, Cyclic Redundancy Check (CRC) information). Also, a broadcast receiving module for receiving information through the terrestrial channel may be of a Digital Multimedia Broadcast Terrestrial (DMB-T), Digital Multimedia Broadcast Satellite (DMB-S), Media Forward Link Only (MediaFLO), Digital Multimedia Broadcast Handheld (DMB-H), or Integrated Services Digital Broadcast Terrestrial (ISDB-T) type.

The energy supply unit 132 serves to supply power to all units within the domestic power network 130. Examples of the energy supply unit may include a distributed power source, a plug-in hybrid electric vehicle, a fuel cell using solar power, a load control device, and an energy reservoir. The distributed power source may refer to power fed from other power supply sources, such as, for example, other local area networks or other self power supply sources (e.g., a plug-in hybrid electric vehicle and a fuel cell using solar power), except for power fed from existing power plants. The distributed power source, plug-in hybrid electric vehicle, fuel cell using solar power, and the like may have autonomous electricity production and storage functions, and moreover may supply electricity to other local area networks. The load control device serves to control other power consuming devices within the domestic power network 130. The energy reservoir may store energy fed from an external power supply source or a self power supply source, and if necessary may distribute energy to the other units within the domestic power network 130, or may supply or sell energy to other networks or units within the network.

The energy consuming unit 133 may consume energy fed from the energy supply unit 132 based on a command transmitted from the local energy management system 131. Examples of the energy consuming unit may include a home appliance, an air conditioner, an automatic temperature control device, a cable set-top box, and an automatic light control device.

The power control apparatus 134 is connected to the energy supply unit 132 or the energy consuming unit 133, and serves to measure energy usage and to collect and analyze information on use of energy. Examples of the power control apparatus may include an electric meter, a gas meter, and a water meter. The power control apparatus 134 receives information on supplied power from the power-plant power network 110 and receives information on power demand from the domestic/office power network 130, and compares and analyzes the received information, thereby enabling efficient power distribution. The information acquired from the power control apparatus 134 is transmitted to the energy metering system 122 of the central control network 120, so as to enable efficient power distribution of the entire intelligent power supply network 100.

The power control apparatus 134 within the domestic/office power network 130 and the energy metering system 122 of the central control network 120 perform similar functions. Although the following description is centered on the power control apparatus 134 for efficient power distribution, the power control apparatus 134 is not limited to the constituent element of the domestic/office power network 130, and may substitute for the energy metering system 122 of the central control network 120. That is, FIG. 1 simply illustrates one embodiment of the intelligent power supply network by way of example, and may be configured in different ways according to functions of the respective units.

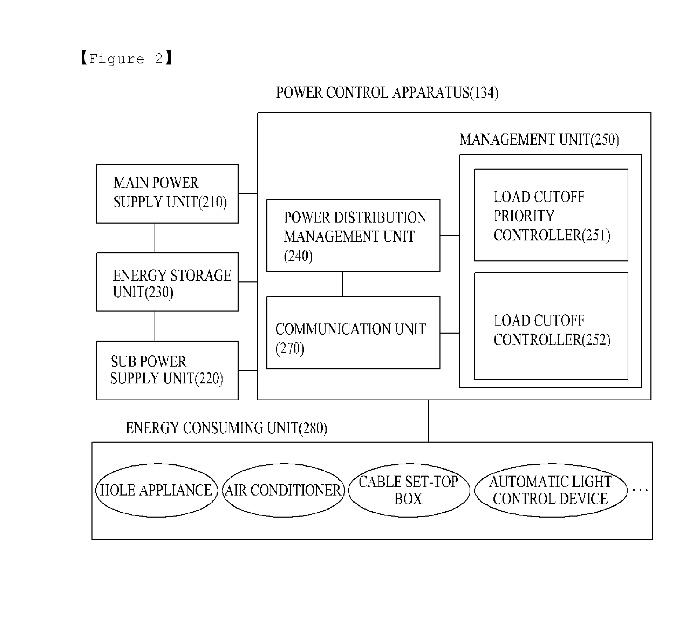

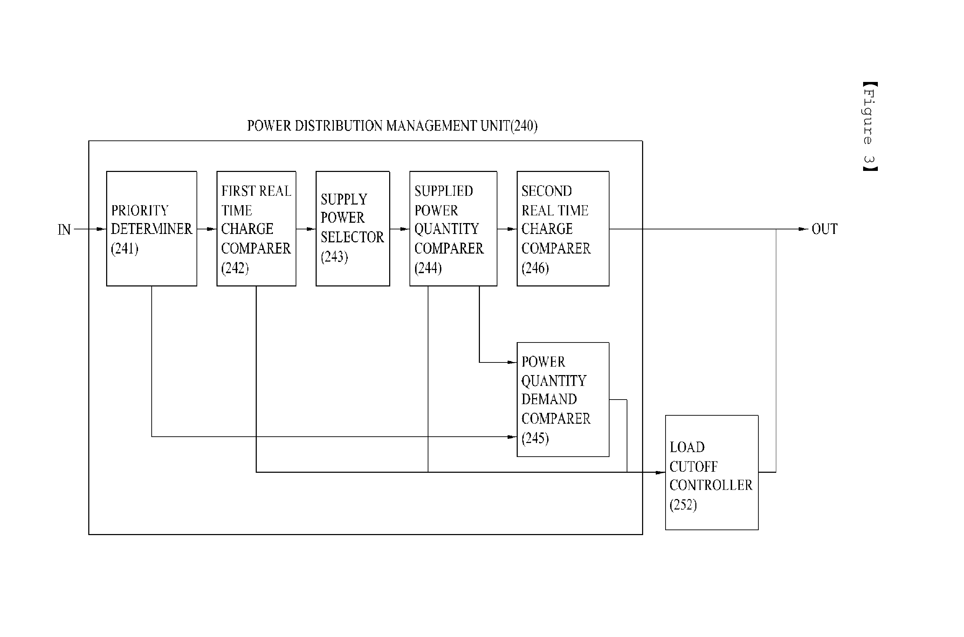

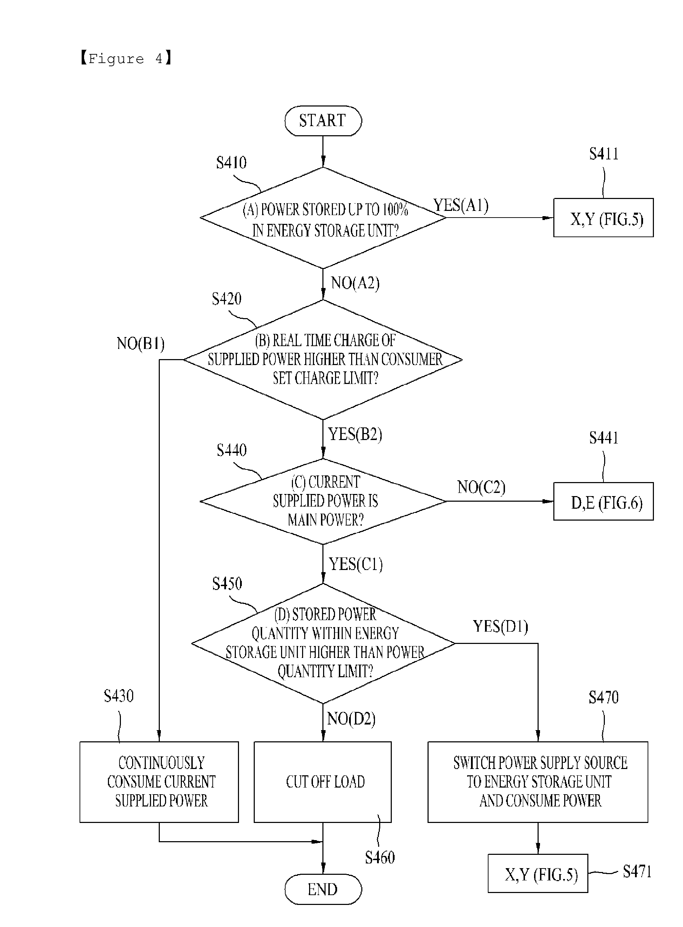

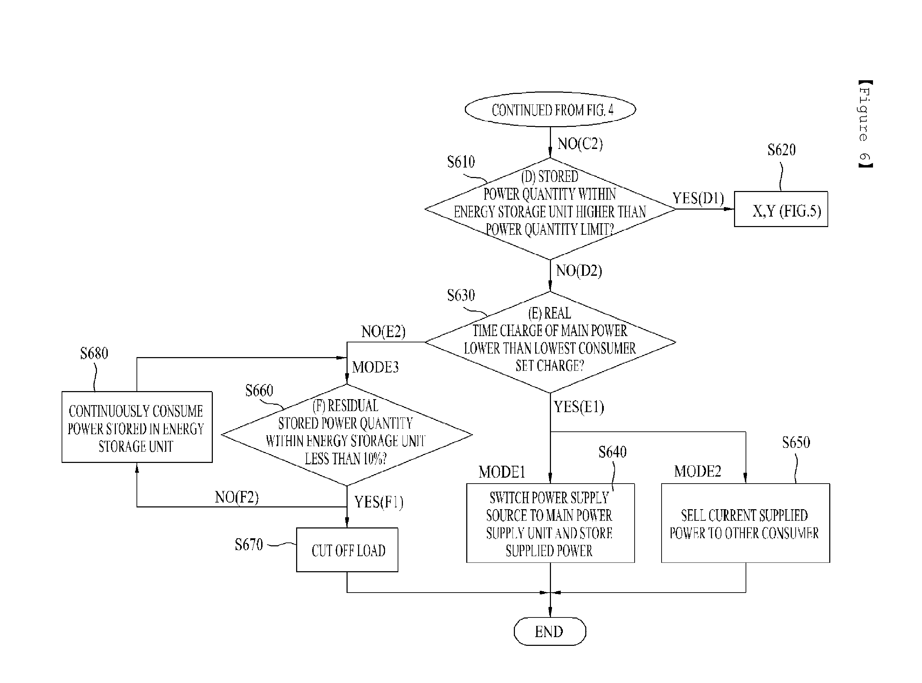

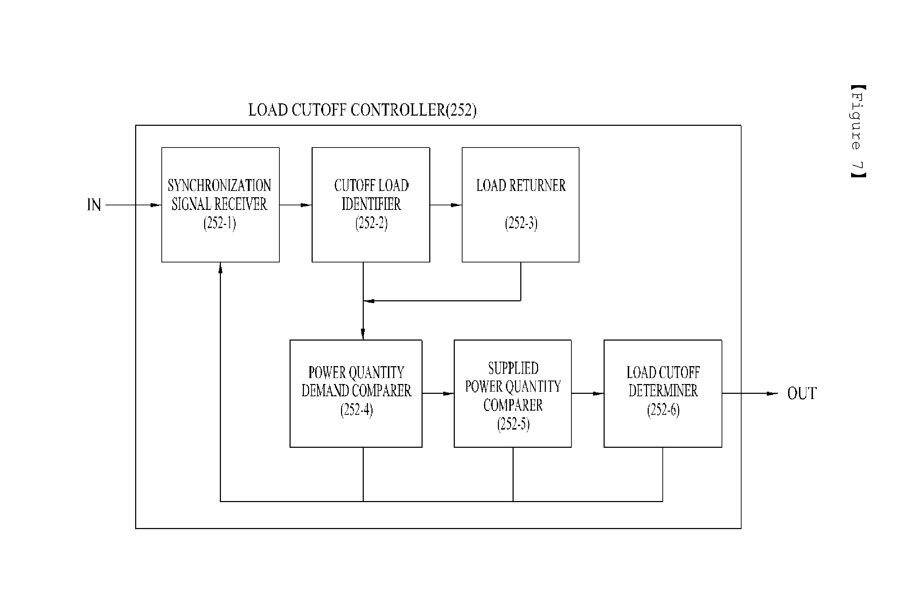

FIG. 2 illustrates a configuration of the power control apparatus, and FIG. 3 and FIGs. 4 to 6 illustrate a power distribution management method that may be realized by the power control apparatus. Also, FIG. 7 illustrates a load cutoff control method that may be realized by the power control apparatus.

FIG. 2 illustrates a schematic configuration of the power control apparatus 134 according to the embodiment of the present invention.

Electric appliances that use electricity, included in the intelligent power supply network, may receive power from a power supply source within a corresponding local area network, or power supply sources within other local networks. Herein, a relatively great quantity of stabilized and high quality power is referred to as main power. For example, power supplied from the power-plant power network may be referred to as main power. Also, power supplied from other power supply units, other than a main power supply unit 210 that supplies the main power, is referred to as sub power.

The intelligent power supply network includes a variety of distributed power sources, and therefore an electric appliance within the domestic power network may receive sub power from a sub power supply unit 220, in addition to the main power. Definite examples of the sub power may include self-produced power from a fuel cell using renewable energy or a solar cell mounted in a home, or a fuel cell mounted in a plug-in hybrid electric vehicle (PHEV), and power fed from other local area networks (for example, other domestic and office power networks). As described above, since a variety of power supply sources is present within the intelligent power supply network, a consumer may select a power supply source that is the most suitable to the consumer by monitoring power information on each power supply source in real time via the power control apparatus 134.

The power control apparatus 134 may generally include a power distribution management unit 240, a load management unit 250, and a communication unit 270. The load management unit 250 may include a load cutoff priority controller 251 and a load cutoff controller 252.

First, the power distribution management unit 240 may receive information on supplied power from an external unit, such as the main power supply unit 210, the auxiliary power supply unit 220, or the energy storage unit 230, via the communication unit 270, and may also receive information on power demand of a home appliance, an air conditioner, a cable set-top box, an automatic light control device, and the like from an energy consuming unit 280 via the communication unit 270. In this way, adaptive power distribution may be accomplished by comparing and analyzing the received information on the supplied power and the power demand.

Examples of the information on the supplied power may include a suppliable power quantity, a real time power charge, a power quality, and a power suppliable time. Also, examples of the information on the power demand may include a current consumed power quantity, power quantity demand, an estimated power quantity, a real time charge of consumed power, a consumed power quality, a desired power consumption time, a consumer set power quantity limit, and a consumer set charge limit. Here, charge information may include various charge values. Examples of the charge information may include a real time charge, a power charge per hour, a power charge per predetermined period, a consumed power charge, an accumulated charge of consumed power, and a power charge per quality grade. The charge information herein may include at least one of the aforementioned charge values.

The load management unit 250 serves to synchronize necessary power consuming units within the network in a procedure of distributing power to the power consuming units, and to cutoff power to unnecessary power consuming units. In this case, the load cutoff priority controller 251 may control the load cutoff priority of the power consuming units. For example, the load cutoff priority may be preset based on power consumption characteristics of the power consuming units. The power consuming units, which require stable power consumption for a long time, such as a refrigerator, a computer, and a lighting apparatus, may become a lower load cutoff priority. The power consuming units, which are adapted to temporarily consume power only when a user wants, such as an air conditioner, a washing machine, an oven, and a hair drier, may be preferentially cutoff.

The load management unit 250 may also control a method of returning the cutoff load. For example, there may be a priority return mode and a sequential return mode. Here, the priority return mode refers to a reverse return mode of the load cutoff priority. More specifically, a refrigerator, which must consume power for a long time, may receive a load cutoff command at the lowest priority. In this case, the refrigerator may be returned first. On the contrary, the most preferentially cutoff load is returned finally. This priority, as described above, may be set based on power consumption characteristics of the power consuming units, may be set based on a current suppliable power quantity, may be set based on an expected consumption charge of the power consuming units, or may be arbitrarily set by a user.

Meanwhile, the sequential return mode refers to a return mode corresponding to a cutoff command receiving order. For example, if a cutoff command is received in the order of a drier, an air conditioner, a washing machine, and a refrigerator, the return mode may be equally performed in the order of a drier, an air conditioner, a washing machine, and a refrigerator.

As described above, although load may be cutoff or returned automatically based on the above described two modes, it is possible for the user to directly select load cutoff and return orders.

The communication unit 270 may be a wired or wireless communication unit. The communication unit serves to receive information on supplied power from the external unit, such as the main power supply unit 210, the sub power supply unit 220, or the energy storage unit 230, and receive information on power demand of a home appliance, an air conditioner, a cable set-top box, an automatic light control device, and the like from the energy consuming unit 280, and may transmit the information to the power distribution management unit 240. The communication unit also serves to transmit a load cutoff or load return command from the load management unit 250 to respective units of the energy consuming unit 280.

As described above, the power control apparatus 134 may be a separate apparatus or system within the local area network, or may take the form of a portable terminal. Examples of the portable terminal may include a mobile phone, a smart phone, a laptop computer, a digital broadcast terminal, a Personal Digital Assistant (PDA), a Portable Multimedia Player (PMP), and a navigator. A wide area or local area communication technology may be applied to the power control apparatus 134. Examples of the local area communication technology may include bluetooth, Radio Frequency Identification (RFID), Infrared Data Association (IrDA), Ultra Wideband (UWB), and ZigBee.

Hereinafter, a power distribution management method that may be performed in the power distribution management unit 240 will be described in detail.

FIG. 3 and FIGs. 4 to 6 illustrate a block diagram showing an internal configuration of the power distribution management unit 240 and flowcharts for explaining the power distribution management method that is performed in the power distribution management unit 240 according to the embodiment of the present invention.

The power distribution management unit 240 may include a priority determiner 241, a first real time charge comparer 242, a supply power selector 243, a supplied power quantity comparer 244, a power quantity demand comparer 245, and a second real time charge comparer 246.

The priority determiner 241 may determine any one of the main power supply unit 210, the sub power supply unit 220 and the energy storage unit 230 of FIG. 2 to be one from which power will be consumed first. For example, as marked by (A), it may be first confirmed whether or not power is stored up to 100% in the energy storage unit 230 (S410). If power is stored up to 100% in the energy storage unit 230 as marked by (A1), the priority determiner may determine to preferentially consume the power stored in the energy storage unit 230 (S411).

In this case, as marked by (X), the power quantity demand comparer 245 may compare a stored power quantity within the energy storage unit 230 with a power quantity demand that a consumer wants to consume (S510). Based on the comparative result, if the power quantity demand that a consumer wants to consume is greater as marked by (X1), the stored power quantity within the energy storage unit 230 is not sufficient, and therefore it may be possible to perform load cutoff (S520). On the other hand, if the stored power quantity within the energy storage unit 230 is greater as marked by (X2), it can be confirmed whether or not any cutoff load is present as marked by (Y) (S530). If the cutoff load is present as marked by (Y1), the cutoff load is returned, and thereafter, power consumption is executed (S540). If the cutoff load is not present as marked by (Y2), consumption of the power stored in the energy storage unit is directly executed (S550).

Meanwhile, if power is not stored up to 100% in the energy storage unit 230 as marked by (A2), the priority determiner 241 may select at least one of the main power supplied from the main power supply unit 210, the sub power supplied from the sub power supply unit 220, and the power stored in the energy storage unit 230 to consume the selected power.

As marked by (B), the first real time charge comparer 242 may compare a real time charge of supplied power with a consumer set charge limit, thereby selecting an appropriate power supply source. For example, if current supplied power is the main power, as marked by (B1), the first real time charge comparer may compare a real time charge of the main power with the consumer set charge limit (S420). If the real time charge is lower than the consumer set charge limit, the current supplied power may be continuously consumed (S430). In this case, the load cutoff controller 252 may perform load cutoff or load return according to whether or not a synchronization signal is received.

On the other hand, if the real time charge is higher than the charge limit as marked by (B2), the supply power selector 243 identifies whether the current supplied power is the main power or the other power (the sub power or the power stored in the energy storage unit) as marked by (C) (S440).

If the current supplied power is the main power (the real time charge of which is higher than the charge limit) as marked by (C), the supplied power quantity comparer 244 may compare a consumer set power quantity limit with the stored power quantity within the energy storage unit 230 as marked by (D) (S450). Here, the consumer set power quantity limit refers to a preset limit value of a main power quantity (or a sub power quantity) that is available for a predetermined period because a charge of the main power (or the sub power) is generally higher than a charge of the power stored in the energy storage unit 230.

Based on the comparative result, if the stored power quantity within the energy storage unit 230 is higher than the power quantity limit as marked by (D1), a consumer may switch the power supply source to the energy storage unit 230 so as to consume the power of the energy storage unit (S470). In this case, similarly, the power quantity demand comparer 245 may compare the stored power quantity within the energy storage unit 230 with the power quantity demand that a consumer wants to consume, prior to consuming the power of the energy storage unit (S471). However, if the stored power quantity within the energy storage unit 230 is lower than the power quantity limit, load cutoff may be performed to restrict power consumption (S460).

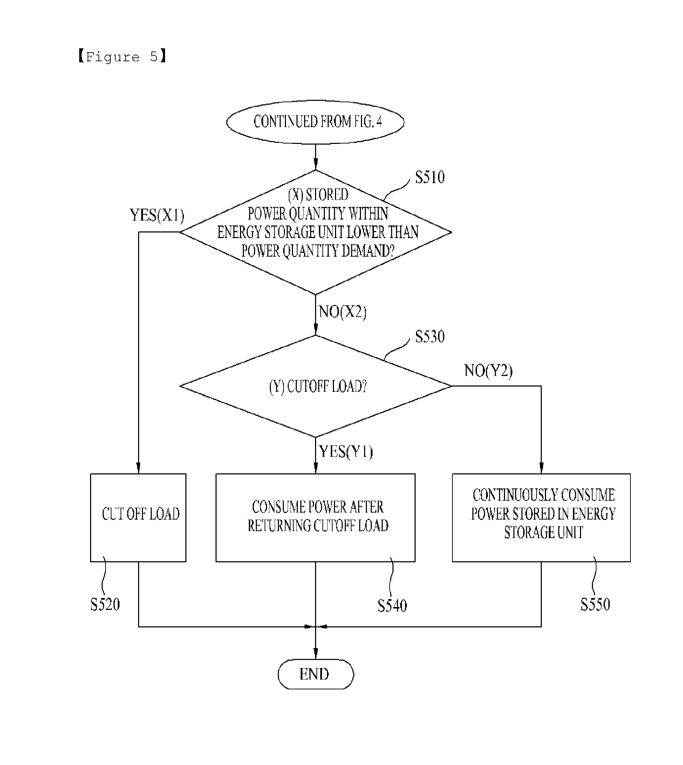

On the other hand, if the current supplied power (the rear time charge of which is higher than the charge limit) is the power stored in the energy storage unit 230 as marked by (C2), the supplied power quantity comparer 244 may compare the consumer set power quantity limit with the stored power quantity within the energy storage unit 230 as marked by (D) (S441 and S610). Based on the comparative result, if the stored power quantity within the energy storage unit 230 is higher than the power quantity limit as marked by (D1), the power quantity demand comparer 245 may again compare the stored power quantity within the energy storage unit 230 with the power quantity demand that a consumer wants to consume, so as to repeatedly perform the process of FIG. 5 (S620).

On the other hand, if the stored power quantity within the energy storage unit 230 is lower than the power quantity limit as marked by (D2), the second real time charge comparer 246 may compare a real time charge of the main power with a lowest consumer set charge as marked by (E), thereby being capable of determining a power consumption mode (S630). Here, the lowest consumer set charge may refer to a preset lowest charge for sale of the power stored in the energy storage unit 230 to other consumers.

Based on the comparative result, if the real time charge of the main power is lower than the lowest consumer set charge as marked by (E1), one of two power consumption modes may be selected. For example, in a first power consumption mode MODE1, in consideration of the fact that the main power is cheaper, the power supply source is again switched to the main power supply unit 210, and the main power supplied from the main power supply unit 210 is stored in the energy storage unit 230, rather than being consumed (S640). A second power consumption mode MODE2 refers to a mode for resale of the supplied main power to other consumers (S650).

On the other hand, if the real time charge of the main power is higher than the lowest consumer set charge as marked by (E2), a third power consumption mode MODE3 may be selected. The third power consumption mode refers to a mode in which power consumption is executed only to a preset quantity limit of the power stored in the energy storage unit 230. For example, as marked by (F), whether or not to perform load cutoff may be determined based on the result of whether or not a residual stored power quantity within the energy storage unit 230 reaches 10% (S660). That is, as marked by (F2), the power stored in the energy storage unit 230 is continuously consumed until the residual power quantity reaches 10% (S680). Then, as marked by (F1), load cutoff is performed if the residual power quantity reaches 10% (S670). Through the above described procedure, efficient power distribution may be accomplished.

FIG. 7 is a block diagram showing an internal configuration of the load cutoff controller 252 according to the embodiment of the present invention.

The load cutoff controller 252 includes a synchronization signal receiver 252-1, a cutoff load identifier 252-2, a load returner 252-3, a power quantity demand comparer 252-4, a supplied power quantity comparer 252-5, and a load cutoff determiner 252-6.

The synchronization signal receiver 252-1 receives a synchronization signal for synchronizing a plurality of power consuming units.

If the synchronization signal from the synchronization signal receiver 252-1 is received, the cutoff load identifier 252-2 identifies whether or not cutoff load is present. If the cutoff load is present, the load returner 252-3 returns the cutoff load.

On the other hand, if the cutoff load is not present, the power quantity demand comparer 252-4 may measure a current consumed power quantity, and may compare the consumed quantity power quantity with the power quantity limit that a consumer wants to consume.

Based on the comparative result, if the consumed power quantity is higher than the power quantity limit that a consumer wants to consume, the supplied power quantity comparer 252-5 may compare an estimated power quantity that will be consumed in the future with a suppliable main power quantity. Based on the comparative result, if the estimated power quantity is higher than the main power quantity, the load cutoff determiner 252-6 performs load cutoff. If the estimated power quantity is lower than the main power quantity, the power is continuously consumed, and simultaneously whether or not the synchronization signal is received is checked. On the other hand, if the consumed power quantity is lower than the power quantity limit that a consumer wants to consume, the power is continuously consumed, and simultaneously whether or not the synchronization signal is received is checked.

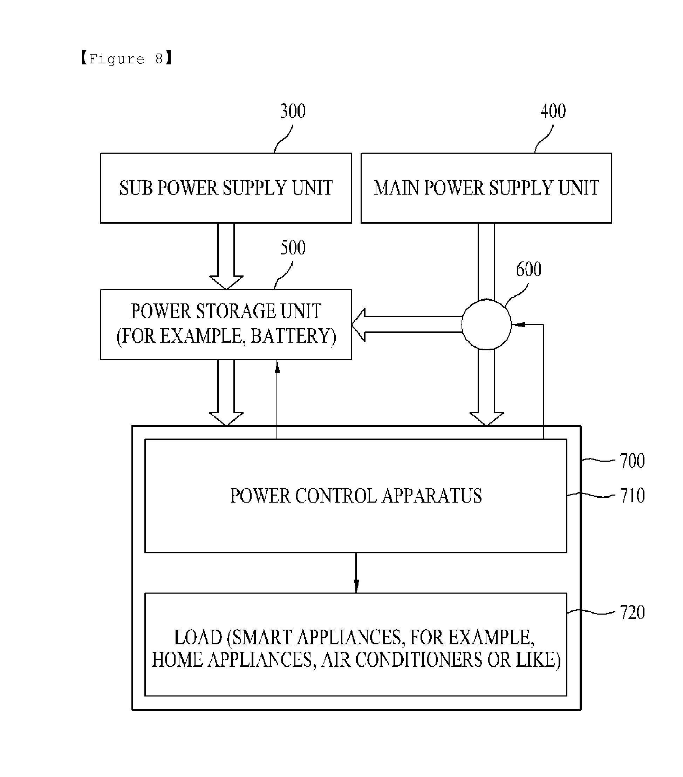

Hereinafter, the configuration and control operation of a power control apparatus according to another embodiment of the present invention will be described with reference to FIGs. 8 to 11. It is noted that the following embodiment is an alternative embodiment with an analogous range to the power control apparatus 134 and the control operation as described above with relation to FIGs. 3 to 7.

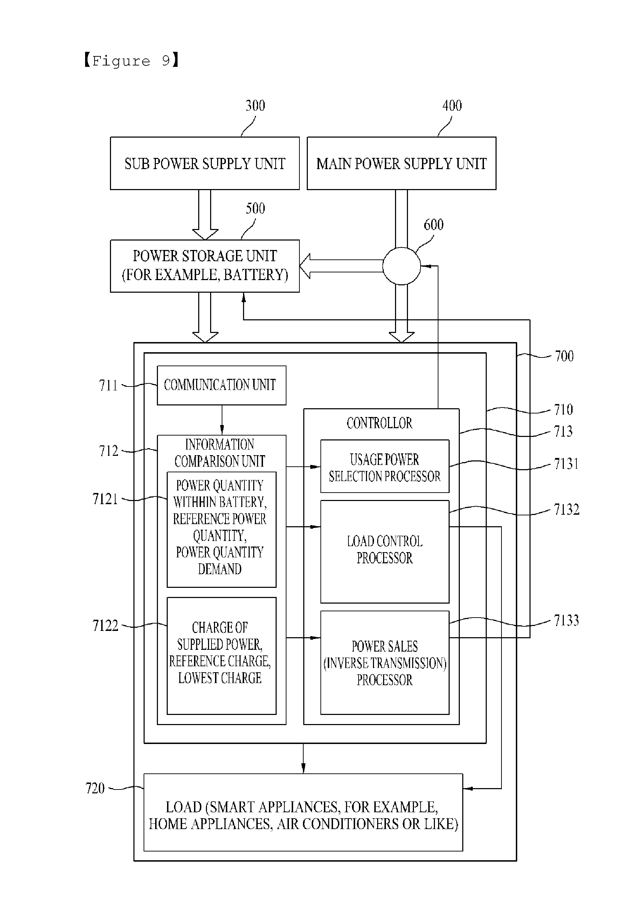

FIGs. 8 and 9 are block diagrams showing an overall configuration including a power control apparatus 710 according to another embodiment of the present invention.

A main power supply unit 400 refers to an external power supply unit, and is substantially identical to the main power supply unit as described above with relation to FIG. 2. A sub power supply unit 300 is adapted to supply power except for the main power, more particularly, power generated by distributed power sources using solar heat, wind power, and the like. The sub power supply unit 300 is substantially identical to the sub power supply unit 220 as described above with relation to FIG. 2. The sub power supply unit 300 may be provided for a customer 700 that will be described hereinafter.

A power storage unit 500 refers to a battery that stores the main power and the sub power and functions similar to the energy storage unit 23 as described above with relation to FIG. 2. The power storage unit 500 may also be provided for the customer 700 that will be described hereinafter.

A switching device 600 has a switching function to store the main power in the power storage unit 500, or directly transmit the main power to the customer 700 without storage using the power storage unit, based on control of the power control apparatus 710. A control operation of the switching device 600 will be described hereinafter.

The customer 700 contains the power control apparatus 710 and a variety of electronic load type appliances 720 including the power consuming units. The electronic load type appliances 720 are connected to the power control apparatus 710 through a communication network, to enable transmission and reception of information, such as a current power usage, a estimated power quantity demand, and the like.

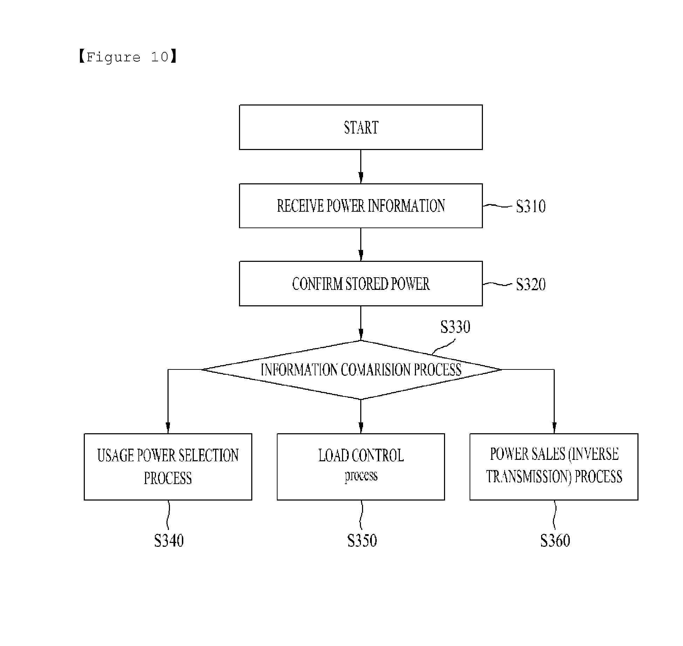

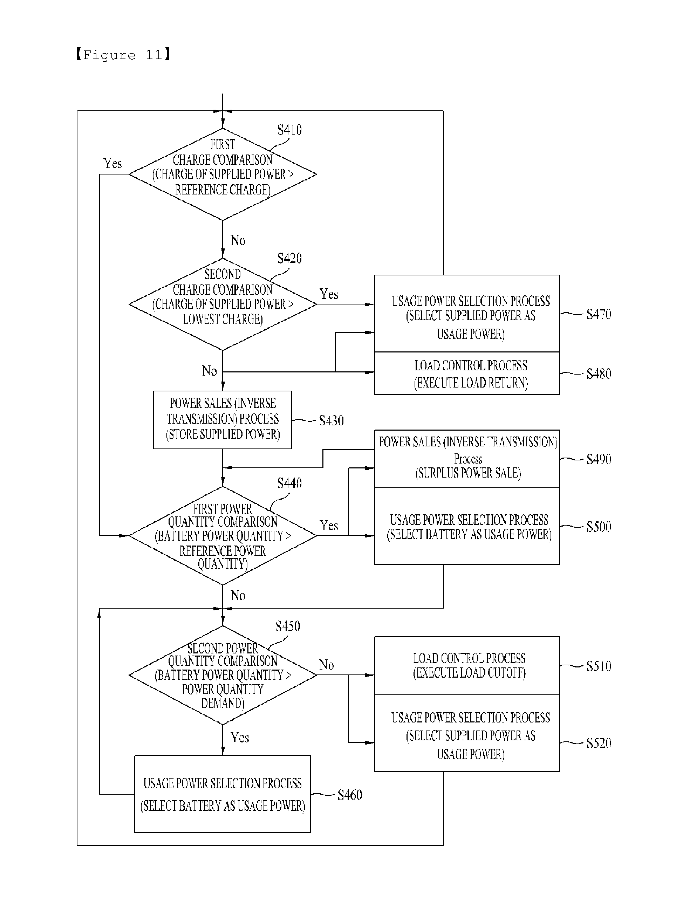

A detailed internal configuration of the power control apparatus 710 will hereinafter be described with reference to FIG. 9, in conjunction with flowcharts of FIGS. 10 and 11 showing a power control method according to another embodiment of the present invention.

The power control apparatus 710 according to the embodiment of the present invention, as shown in FIG. 9, includes a communication unit 711, an information comparison unit 712, and a controller 713.

The communication unit 7110 may perform bidirectional communication via a power information network. In particular, the communication unit may receive not only charge information of the power supplied via the main power supply unit 400, but also information on a stored power quantity within the power storage unit 500. Also, the communication unit 711 may receive information on a variety of power quantities via communication with the electronic load type appliances 720.

The information comparison unit 712 serves to set at least a reference charge, the lowest charge, a reference power quantity, and a power quantity demand of the electronic load type appliances 720, and to compare the set reference values with the information received via the communication unit 710, such as the charge of the supplied power and the stored power quantity information. More particularly, the information comparison unit 712 may include a charge comparer 7122, which compares the charge of the supplied power with the reference charge, and also compares the charge of the supplied power with the lowest charge, and a power quantity comparer 7121, which compares the stored power quantity (also referred to as 'battery power quantity') with the reference power quantity, and also compares the stored power quantity with the power quantity demand.

The reference charge refers to an allowable power charge that is set by a user or system for the customer 700. The lowest charge refers to a power charge that is set by the user or system for the customer 700 and is a standard of power storage and power sale. Accordingly, in general, the reference charge is a power charge higher than the lowest charge. Also, the reference power quantity refers to a sufficiently available power quantity even when assuming that all electric appliances for the customer 700 consume power to the maximum extent. Accordingly, a power quantity exceeding the reference power quantity is referred to as a surplus power quantity. On the other hand, the power quantity demand refers to the minimum power quantity required for operation of the electronic load type appliances 720 that is set by the user or system for the customer 700.

The controller 713 includes a usage power selection processor 7131, which selects any one of externally supplied power and internally stored power as usage power for the customer based on the comparative result of the information comparison unit 712, a load control processor 7132, which executes any one of load cutoff and load return for the customer, and a power sales processor 7133 for external sale of stored surplus power for the customer.

Referring to FIG. 10, the communication unit 711 receives external power information (S310). The power information, for example, may include a power charge. However, for the same purpose, the power charge information may be replaced by power demand information. The communication unit 711 confirms information on a stored power quantity within the above described power storage unit 500 (S320). This information is referred to as power quantity information. In general, the communication unit receives confirmed information on the stored power quantity within the power storage unit 500 via a local area communication device that is attached to one side of the corresponding power storage unit.

Thereafter, the information comparison unit 712 performs an information comparison process S330 in which the received power information (for example, the power charge information) and the power quantity information are compared with the preset reference charge, the lowest charge, the reference power quantity, and the power quantity demand, respectively, as described above.

Based on the result of the information comparison process S330 by the information comparison unit 712, the controller 713 may perform a power selection control process S340 by the above described usage power selection processor 7131, may perform a load cutoff process or load return process S350 by the load control processor 7132, or may perform a power storage process or power sales process S360 by the power sales processor 7133. The processes S340 to S360 may be simultaneously or sequentially performed. Also, the results of the processes S340 to S360 are feedback to the information comparison unit 712, which enables an inter-operation having an effect on an information comparison object of the information comparison process S330.

This will hereinafter be described with reference to FIG. 11. FIG. 11 shows the information comparison process S330 performed by the information comparison unit 712 and all the control processes S340 to S360.

The information comparison process S330 includes a first charge comparison step S410 of receiving information on the charge of the supplied power and preparing the charge of the supplied power with the preset reference charge, and a second charge comparison step S420 of comparing the charge of the supplied power with the preset lowest charge. These steps S410 and S420 may be called a charge comparison step. The information comparison process may further include a first power quantity comparison step S440 of confirming a stored power quantity and comparing the stored power quantity with the preset reference power quantity, and a second power quantity comparison step S450 of comparing the stored power quantity with the preset power quantity demand. These steps S430 and S440 may be called a power quantity comparison step.

The above described usage power selection process S340 based on the information comparison process S330 will hereinafter be described. Specifically, if the charge of the supplied power is lower than the reference charge in the first charge comparison step S420, the externally supplied power is selected as usage power for the customer (S470). If the charge of the supplied power is higher than the reference charge, through the first power quantity comparison step S440 and the second power quantity comparison step S450, the externally supplied power is selected as the usage power for the customer even if the stored power quantity is lower than the power quantity demand (S520). In this case, the above described usage power selection processor 7131 controls the above described switching device 600 such that the power supplied from the main power supply unit 400 is transmitted to the customer 700.

On the other hand, if the charge of the supplied power is higher than the reference charge in the first charge comparison step S410, it is determined whether or not the stored power quantity is higher than the reference power quantity in the first power quantity comparison step S440. If it is judged that the stored power quantity is higher than the reference power quantity, the power stored in the battery is selected as the usage power for the customer 700 (S500). Also, if the stored power quantity is lower than the reference power quantity in the first power quantity comparison step S440, but is higher than the power quantity demand in the second power quantity comparison step S450, the stored power within the battery is selected as the usage power for the customer 700 (S460). Thereafter, the stored power within the battery selected in step S460 is feedback to step S450 (this corresponds to feedback to the information comparison process S330). In this way, it is continuously confirmed whether or not the corresponding battery power quantity becomes lower than the power quantity demand. If the corresponding battery power quantity becomes lower than the power quantity demand, the supplied power is thereafter switched to the usage power (S520). In this case, the above described usage power selection processor 7131 controls the above described switching device 600 such that the power supplied from the main power supply unit 400 is not transmitted to the customer 700.

The above described load control process S350 based on the information comparison process S330 will hereinafter be described. The load control process S350 is divided into a load cutoff execution process S510 and a load return execution process S480. In the load cutoff execution process S510, through the first power quantity comparison step S440 and the second power quantity comparison step S450, at least one load for the customer is cut off if the stored power quantity within the battery is lower than the reference power quantity and the power quantity demand. A definite execution method of the load cutoff execution process S510, for example, may be performed as described above with relation to FIG. 7. In the load return execution process S480, through the first charge comparison step S410 and the second charge comparison step S420, the cutoff load for the customer is returned if the charge of the supplied power is lower than the reference charge and the lowest charge. A definite execution method of the load return execution process S480 may, for example, be performed as described above with relation to FIG. 7.

The above described power sales process S360 based on the information comparison process S330 will hereinafter be described. The power sales process S360 is divided into a supplied power storage process S430 and a surplus power sales process S490. In the supplied power storage process S430, through the first charge comparison step S410 and the second charge comparison step S420, the supplied power is controlled so as to be stored in the power storage unit 500 for the customer 700 if the charge of the supplied power is lower than the reference charge and the lowest charge. For example, the power sales processor 7133 controls the switching device 600 such that the power supplied from the main power supply unit 400 is stored in the power storage unit 500. Thereafter, if the stored power quantity within the power storage unit exceeds the reference power quantity in the first power quantity comparison step (S440), a surplus power sales process S490 is performed for external sale of a surplus power quantity exceeding the reference power quantity of the stored power quantity. For sale of the power, the above described power sales processor 7133 controls external sale of the stored power within the power storage unit 500. Although not illustrated in the present invention, it is possible to perform a control function of providing a user with information on sale of the power via a display device provided at the exterior of the power control apparatus 710. In particular, upon sale of the power, inverse transmission of the stored surplus power to the above described main power supply unit 400 is possible, although the present invention is not limited thereto.

It will be appreciated from the flowchart of FIG. 11 that the plurality of control processes S430, S460, S470, S480, S490, S500, S510, and S520 and information comparison steps S410, S420, S440 and S450 may be intimately linked to one another, and also execution of the corresponding processes may be automatically changed according to situations and/or conditions that are variable in real time.

Also, for convenience of description, the power quantity comparer 7121 and the charge comparer 7132 within the information comparison unit 712 are configured as a block for executing the control processes S430, S460, S470, S480, S490, S500, S510 and S520 and information comparison steps S410, S420, S440 and S450. Although the controller 713 has been described as including the usage power selection processor 7131, the load control processor 7132, and the power sales processor 7133, the present invention is not limited thereto, and all the processes and steps may be executed in a single programmed central processing unit (CPU).

### [Mode for Invention]

A power control method and a power distribution management method according to the present invention may be programmed for computer execution and may be stored in a computer readable recording medium. The computer readable recording medium includes all types of recording devices in which data is stored in a computer-readable manner. Examples of the computer-readable recording medium include a ROM, a RAM, a CD-ROM, a magnetic tape, a floppy disc, an optical data storage, and a carrier wave (e.g., data transmission through the Internet). Bit streams produced by the power control method and the power distribution management method according to the present invention may be stored in the computer readable recording medium, or may be transmitted via a wired/wireless communication network.

### [Industrial Applicability]

The present invention may be applied to a power control apparatus that requires efficient power management and a power system including the same. Although the invention has been described with reference to the exemplary embodiments and the drawings, those skilled in the art will appreciate that the present invention is not limited thereto and various modifications and variations can be made in the present invention without departing from the spirit or scope of the invention described in the appended claims.

## Claims

1. A power control method comprising:
a charge comparison step including a first charge comparison step for receiving charge information of supplied power and comparing the charge of the supplied power with a preset reference charge, and a second charge comparison step for comparing the charge of the supplied power with the preset lowest charge;
a power quantity comparison step including a first power quantity comparison step for confirming a stored power quantity within a power storage unit and comparing the stored power quantity with a preset reference power quantity, and a second power quantity comparison step for comparing the stored power quantity with a preset power quantity demand; and
a control step for selecting one of externally supplied power and internally stored power as usage power for a customer based on the results obtained through at least one of the charge comparison step and the power quantity comparison step,
wherein, if it is determined through the first charge comparison step that the charge of the supplied power is lower than the reference charge or is higher than the reference charge and it is determined through the first and second power quantity comparison steps that the stored power quantity is lower than the reference power quantity and the power quantity demand, the externally supplied power is selected as the usage power for the customer, and
wherein, if it is determined through the first charge comparison step that the charge of the supplied power is higher than the reference charge and it is determined through the first and second power quantity comparison steps that the stored power quantity is higher than the reference power quantity or the power quantity demand, the stored power is selected as the usage power for the customer.

2. A power control method comprising:
a charge comparison step including a first charge comparison step for receiving charge information of supplied power and comparing the charge of the supplied power with a preset reference charge, and a second charge comparison step for comparing the charge of the supplied power with the preset lowest charge;
a power quantity comparison step including a first power quantity comparison step for confirming a stored power quantity within a power storage unit and comparing the stored power quantity with a preset reference power quantity, and a second power quantity comparison step for comparing the stored power quantity with a preset power quantity demand; and
a load control process execution step for executing one of load cutoff and load return for a customer through at least one of the charge comparison step and the power quantity comparison step,
wherein, it is determined through the first and second charge comparison steps that the charge of the supplied power is lower than the reference charge and the lowest charge, a load return process for executing return of cutoff load for the customer is executed, and
wherein, it is determined through the first and second power quantity comparison steps that the stored power quantity is lower than the reference power quantity and the power quantity demand, a load cutoff process for cutting off at least one load for the customer is executed.

3. A power control method comprising:
a charge comparison step including a first charge comparison step for receiving charge information of supplied power and comparing the charge of the supplied power with a preset reference charge, and a second charge comparison step for comparing the charge of the supplied power with the preset lowest charge;
a power quantity comparison step for confirming a stored power quantity within a power storage unit and comparing the stored power quantity with a preset reference power quantity; and
a control step for performing external sale of stored surplus power for a customer based on the results obtained through at least one of the charge comparison step and the power quantity comparison step,
wherein, if it is determined through the first and second charge comparison steps that the charge of the supplied power is lower than the reference charge and the lowest charge, the supplied power is stored in a power storage unit for the customer, and
wherein, if it is determined through the power quantity comparison step that the stored power quantity is higher than the reference power quantity, external sale of a surplus power quantity exceeding the reference power quantity among the stored power quantity is performed.

4. A power control method comprising:
a charge comparison step including a first charge comparison step for receiving charge information of supplied power and comparing the charge of the supplied power with a preset reference charge, and a second charge comparison step for comparing the charge of the supplied power with the preset lowest charge;
a power quantity comparison step including a first power quantity comparison step for confirming a stored power quantity within a power storage unit and comparing the stored power quantity with a preset reference power quantity, and a second power quantity comparison step for comparing the stored power quantity with a preset power quantity demand; and
a power control step for selectively executing at least one of a usage power selection process for selecting one of externally supplied power and internally stored power as usage power for a customer, a load control process for executing one of load cutoff and load return for the customer, and a power sales process for external sale of stored surplus power for the customer, based on the results obtained through at least one of the charge comparison step and the power quantity comparison step.

5. A power control apparatus comprising:
a communication unit for receiving charge information of supplied power for a customer and receiving information on stored power quantity for the customer, the communication unit having a bidirectional communication function via a power information network;
an information comparison unit for setting a reference charge, the lowest charge, a reference power quantity, and a power quantity demand, and comparing the set reference values with the charge information of the supplied power and the stored power quantity information received through the communication unit, the information comparison unit including a charge comparer for comparing the charge of the supplied power with the reference charge and comparing the charge of the supplied power with the lowest charge, and a power quantity comparer for comparing the stored power quantity with the reference power quantity and comparing the stored power quantity with the power quantity demand; and
a controller for selecting one of externally supplied power and internally stored power as usage power for the customer based on the comparative results of the information comparison unit, wherein the controller selects the externally supplied power as the usage power for the customer if the charge of the supplied power is lower than the reference charge or is higher than the reference charge and if the stored power quantity is lower than the reference power quantity and the power quantity demand, and
wherein the controller selects the stored power as the usage power for the customer if the charge of the supplied power is higher than the reference charge and if the stored power quantity is higher than the reference power quantity or the power quantity demand.

6. A power control apparatus comprising:
a communication unit for receiving charge information of supplied power for a customer and receiving information on stored power quantity for the customer, the communication unit having a bidirectional communication function via a power information network;
an information comparison unit for setting a reference charge, the lowest charge, a reference power quantity, and a power quantity demand, and comparing the set reference values with the charge information of the supplied power and the stored power quantity information received through the communication unit, the information comparison unit including a charge comparer for comparing the charge of the supplied power with the reference charge and comparing the charge of the supplied power with the lowest charge, and a power quantity comparer for comparing the stored power quantity with the reference power quantity and comparing the stored power quantity with the power quantity demand; and
a controller for executing a load control process that cuts off or returns at least one load for a customer based on the comparative results of the information comparison unit,
wherein the controller executes a load return process for returning the at least one cutoff load for the customer if the charge of the supplied power is lower than the reference charge and the lowest charge, and
wherein the controller executes a load cutoff process for cutting off the at least one load for the customer if the stored power quantity is lower than the reference power quantity and the power quantity demand.

7. A power control apparatus comprising:
a communication unit for receiving charge information of supplied power for a customer and receiving information on stored power quantity for the customer, the communication unit having a bidirectional communication function via a power information network;
an information comparison unit for setting a reference charge, the lowest charge, a reference power quantity, and a power quantity demand, and comparing the set reference values with the charge information of the supplied power and the stored power quantity information received through the communication unit, the information comparison unit including a charge comparer for comparing the charge of the supplied power with the reference charge and comparing the charge of the supplied power with the lowest charge, and a power quantity comparer for comparing the stored power quantity with the reference power quantity and comparing the stored power quantity with the power quantity demand; and
a controller for performing external sale of stored surplus power for the customer based on the comparative results of the information comparison unit,
wherein the controller stores the supplied power in a power storage unit if the charge of the supplied power is lower than the reference charge and the lowest charge, and
wherein the controller performs of external sale of a surplus power quantity exceeding the reference power quantity among the stored power quantity if the stored power quantity is higher than the reference power quantity.

8. A power control apparatus comprising:
a communication unit for receiving charge information of supplied power for a customer and receiving information on stored power quantity for the customer, the communication unit having a bidirectional communication function via a power information network;
an information comparison unit for setting a reference charge, the lowest charge, a reference power quantity, and a power quantity demand, and comparing the set reference values with the charge information of the supplied power and the stored power quantity information received through the communication unit; and
a controller for controlling selective execution of at least one of a usage power selection process for selecting one of externally supplied power and internally stored power as usage power for the customer, a load control process for executing one of load cutoff and load return for the customer, and a power sales process for external sale of stored surplus power for the customer, based on the comparative results of the information comparison unit.

9. A power control apparatus for managing power distribution in an intelligent power supply network including a plurality of power supply sources, the power control apparatus comprising:
a power distribution management unit for receiving supplied power information from at least one of the plurality of power supply sources, receiving power demand information from power consuming units, and performing power distribution based on the supplied power information and the power demand information, thereby determining a power consumption mode; and
a load management unit for determining whether or not to cutoff the power consuming units based on a preset load cutoff priority if power is consumed based on the power consumption mode,
wherein the supplied power information includes a real time charge of supplied power and a suppliable power quantity limit, and
wherein the power demand information includes a consumer set power quantity limit, a consumer set charge limit, and the consumer set lowest charge.

10. The power control apparatus according to claim 9, wherein the power distribution management unit includes:
a first real time charge comparer for comparing the real time charge of the supplied power with the consumer set charge limit if power is not stored up to 100% in an energy storage unit;
a supply power selector for identifying whether or not current supplied power is main power, sub power, or stored power within the energy storage unit among the plurality of power supply sources if the real time charge is higher than the charge limit;
a supplied power quantity comparer for comparing a stored power quantity within the energy storage unit with the consumer set power quantity limit if the current supplied power is the main power; and
a second real time charge comparer for comparing a real time charge of the main power with the consumer set lowest charge if the stored power quantity within the energy storage unit is lower than the power quantity limit, thereby determining the power consumption mode.

11. The power control apparatus according to claim 10, wherein the power consumption mode includes at least one of a first power consumption mode for storing the supplied main power in the energy storage unit, a second power consumption mode for selling the supplied main power to other consumers, and a third power consumption mode for consuming the power until the stored power quantity within the energy storage unit reaches a preset residual power quantity.

12. The power control apparatus according to claim 10,
wherein the main power is power supplied from a power plant among the plurality of power supply sources,
wherein the sub power is power supplied from at least one of a renewable fuel cell, a solar cell, and a fuel cell in a plug-in hybrid vehicle, and
wherein the stored power within the energy storage unit is stored power of at least one of the main power and the sub power.

13. The power control apparatus according to claim 9, wherein the power distribution management unit includes:
a first real time charge comparer for comparing the real time charge of the supplied power with the consumer set charge limit if power is not stored up to 100% in an energy storage unit;
a supply power selector for identifying whether or not current supplied power is main power, sub power, or stored power within the energy storage unit among the plurality of power supply sources if the real time charge is higher than the charge limit;
a supplied power quantity comparer for comparing a stored power quantity within the energy storage unit with the consumer set power quantity limit if the current supplied power is the main power; and
a power quantity demand comparer for switching the main power to the stored power within the energy storage unit if the stored power quantity within the energy storage unit is higher than the power quantity limit, and comparing the stored power quantity within the energy storage unit with a power quantity demand that a consumer wants to consume, thereby determining whether or not to consume the power.

14. The power control apparatus according to claim 9, wherein the power distribution management unit includes:
a first real time charge comparer for comparing the real time charge of the supplied power with the consumer set charge limit if power is not stored up to 100% in an energy storage unit;
a supply power selector for identifying whether or not current supplied power is main power, sub power, or stored power within the energy storage unit among the plurality of power supply sources if the real time charge is higher than the charge limit;
a supplied power quantity comparer for comparing a stored power quantity within the energy storage unit with the consumer set power quantity limit if the current supplied power is the stored power within the energy storage unit; and
a power quantity demand comparer for comparing the stored power quantity within the energy storage unit with a power quantity demand that a consumer wants to consume if the stored power quantity within the energy storage unit is higher than the power quantity limit, thereby determining whether or not to consume the power.

15. The power control apparatus according to claim 9,
wherein the load management unit further includes a load returner for returning the cutoff load based on a preset return mode,
wherein the preset return mode includes a priority return mode and a sequential return mode,
wherein the priority return mode is a mode of returning cutoff loads in reverse of a cutoff command receiving order, and the sequential return mode is a mode of returning the cutoff loads in the cutoff command receiving order, and
wherein the preset load cutoff priority is set based on power consumption characteristics of the power consuming units.
